# EUROPEAN PATENT SPECIFICATION

(11) **EP 3 905 489 B1**
(45) Date of publication and mention of the grant of the patent: **25.09.2024**
(21) Application number: 21167481.7
(22) Date of filing: 08.04.2021
(51) Int. Cl.: H02K 7/10, F16D 41/06, F16D 41/064, E06B 9/56, E06B 9/80, E06B 9/72, F16D 41/067

(54) **NON-RETURN MECHANISM FOR A MOTOR OF AN ELECTRIC CURTAIN**
RÜCKLAUFSPERRMECHANISMUS FÜR EINEN MOTOR EINES ELEKTRISCHEN VORHANGS
MÉCANISME DE NON-RETOUR POUR UN MOTEUR D'UN RIDEAU ÉLECTRIQUE

(30) Priority: 30.04.2020 CN 202010363082
(43) Date of publication of application: 03.11.2021
(73) Proprietor: Ningbo Sunfree Motor Technology Company Limited, Ningbo City, Zhejiang 315145 (CN)
(72) Inventor: ZHOU, Yongqiang, Ningbo City, Zhejiang 315145 (CN); WEI, Jianhong, Ningbo City, Zhejiang 315145 (CN)
(74) Representative: Cabinet Chaillot

(56) References cited:
- EP-A1- 1 101 968
- CN-A- 110 445 302

## Description

### Technical Field

The present invention relates to the technical field of motors of electric curtains, in particular to a non-return mechanism for a motor of an electric curtain.

### Background

As people's living standard continuously raises, an electric and intelligent curtain becomes more and more popular. Considering that large windows of high-end residences usually provide marvelous sunshine experience for consumers, curtains tend to be larger and larger accordingly. In this case, more requirements on motors of the curtains have been brought up, for instance, the size of the motor is better to be smaller, with larger output torque and non-return force, lower operation noise, and higher stability.

The working principle of a motor of a curtain generally includes: sending a forward or reverse rotation order to a DC motor through the control system, the DC motor retards a motor and increases output torque through a gearbox, and a curtain fabric is driven by an output shaft to operate, thereby opening or closing the curtain. In this process, when the motor is loaded, it moves to the designated position silently and does not slip. The key technical difficulty lies in that after the curtain stops, its motor can provide enough non-return force to offset the gravity of the curtain, so that the curtain can be maintained at the required position steadily.

The non-return braking property of the motor plays a vital role to ensure a steady operation, and the existing non-return drive scheme is that by increasing the cogging torque of the rotor of the DC motor and the reverse electromotive force produced by motor short circuit, non-return drive is achieved through amplification of a reduction gearbox. However, a larger cogging torque mainly causes loud noise of the DC motor, the service life of the DC motor is greatly reduced if the motor is short circuited to produce reverse electromotive force for brake, and the non-return forces provided from these two directions are insufficient to meet the requirements of large curtains.

By adding magnets and iron cores between the motor output shaft and the teeth of the motor to increase static torque or improve the non-return force of the motor of the curtain through spring friction, the motor of the curtain is prevented from slipping. Whereas, the above effect is realized at the cost of the efficiency and service life of the motor, while the defects of loud noise and low efficiency are obvious at the same time.

Besides, in actual use, the curtain may instantaneously produce an impact force to the gear of its motor under the effect of external factors such as heavy wind or pulling by hands, even directly damage the gearbox and core of the motor of the curtain, leading to failure of the whole curtain. The above is the after-sale problems frequently occurring in the existing scheme. Therefore, how to effectively provide a non-return force so as to steadily maintain the curtain at the required position when the motor stops but have no harm to the motor and the gearbox is the issue that urgently needs to be resolved at present.

Systems of the kind described above are known e.g. from CN 110 445 302 A and EP 1 101 968 A1.

### Summary

One objective of the present invention is to overcome the shortcomings of the prior arts by providing a non-return mechanism for a motor of an electric curtain, which not only effectively provides a non-return force to steadily maintain the curtain at the required position when the motor stops, but also prevents the gearbox and the motor from being damaged as the output shaft reversely drives the gearbox and the motor under the effect of an external force or gravity.

The technical solution adopted to resolve the above technical problem is provided in claim 1. Preferred embodiments are laid down in the dependent claims.

As compared to the prior art, the non-return mechanism for a motor of an electric curtain disclosed by the invention has the following advantages that the flange, the output shaft and the non-return blocks jointly cooperate with the output bracket of the gearbox so as to achieve unidirectional drive fit. That is to say, when the motor drives the output bracket to rotate, the output bracket pokes the non-return block, and the non-return block pushes against the inner wall of the arc-shaped groove of the output shaft, thereby driving the output shaft to synchronously rotate; when the motor ceases, the output bracket stops rotation, the curtain, under the effect of an external force or own gravity drives the output shaft, but at this time, the output shaft is locked so as not to reversely drive the output bracket, thereby avoiding damaging the gearbox and the motor on the grounds that when the output shaft rotates, the arc-shaped groove pushes the non-return block which is locked as the movable clearance between the non-return block and the inner wall of the accommodating cavity is reduced by the pushing of the arc-shaped groove, so that the output shaft is prevented from reversely driving the output bracket, the gearbox and the motor are protected and their service lives are prolonged.

### Brief Description of the Drawings

Fig. 1 is a schematically structural diagram of the present invention;
Fig. 2 is an exploded view of the present invention;
Fig. 3 is a schematically structural diagram of a non-return component of the present invention;
Fig. 4 is a schematically structural diagram of an output shaft of the present invention;
Fig. 5 is a schematically structural diagram of an output bracket of the present invention;
Fig. 6 is a cross-section view showing match of the non-return component and the output bracket of the present invention;
Fig. 7 is a cross-section view of the output bracket of the present invention in a forward rotation state;
Fig. 8 is a cross-section view of the output bracket of the present invention in a reverse rotation state;
Fig. 9 is a cross-section view of the output shaft of the present invention in a forward rotation state;
Fig. 10 is a cross-section view of the output shaft of the present invention in a reverse rotation state.

The numerals represent: 1 motor; 2 gearbox; 2.1 clamping groove; 3 flange; 3.1 accommodating cavity; 3.2 through hole; 3.3 step surface; 3.4 outer gear ring; 3.5 fastener; 4 output shaft; 4.1 arc-shaped groove; 4.2 brake block; 4.3 cavity; 4.4 locating shaft; 4.5 locating step; 4.6 annular slot; 4.7 driving head; 5 non-return block; 6 output bracket; 6.1 poke rod; 6.2 shaft hole; 7 circlip.

### Detailed Description of the Embodiments

The present invention will be described in detail in the following documents with reference to the appended drawings.

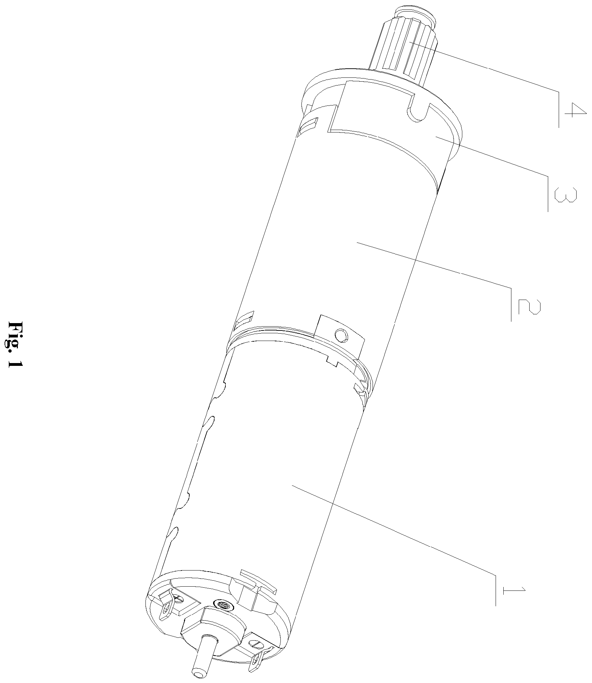

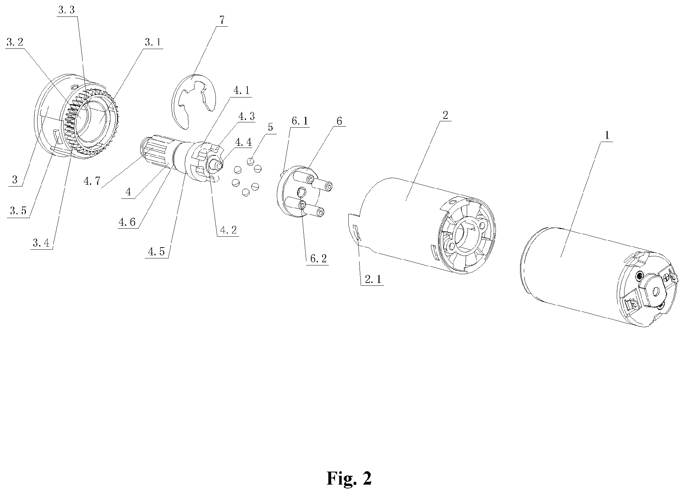

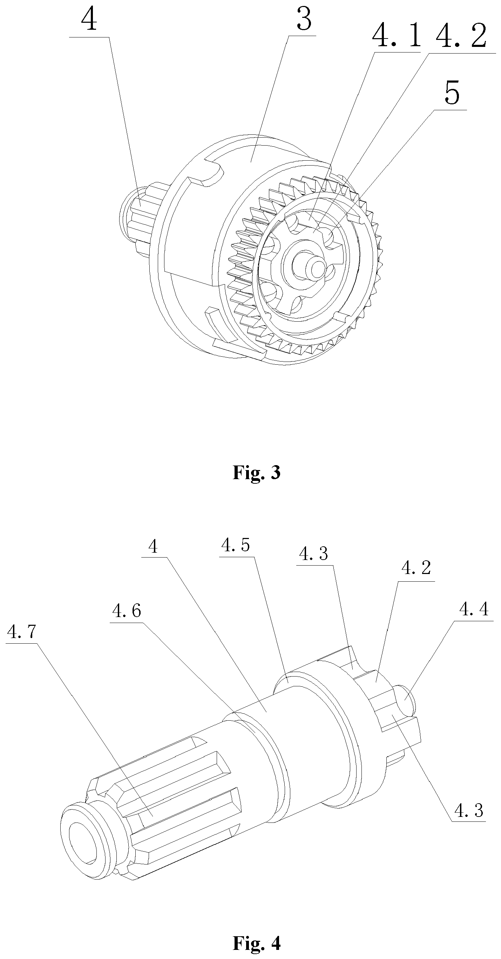

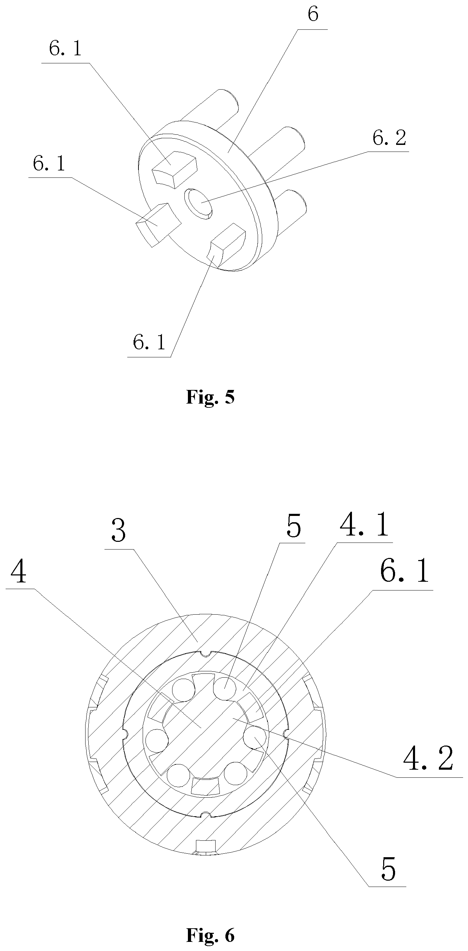

As shown in Figs. 1-6, a non-return mechanism for a motor of an electric curtain comprises a motor 1 and a gearbox 2 that are successively connected. The output end of the gearbox 2 is connected with a non-return component. The non-return component comprises a flange 3, an output shaft 4 and non-return blocks 5. The flange 3 is internally provided with an accommodating cavity 3.1. The output end of the gearbox 2 is provided with an output bracket 6. The output bracket 6 is in unidirectional drive fit with one end of the output shaft 4 toward the gearbox 2 and they fit within the accommodating cavity 3.1. The non-return blocks 5 are arranged at the joint of the output bracket 6 and the output shaft 4. The flange 3 is connected with the gearbox 2. The end portion of one end of the output shaft 4 toward the gearbox 2 is provided with at least one arc-shaped groove 4.1 that is concave along the radial direction. The non-return block 5 is accommodated within the arc-shaped groove 4.1. A poke rod 6.1 for poking the non-return block 5 extends from the output bracket 6 and fits within the arc-shaped groove 4.1. A brake block 4.2 is bulged from the bottom of the arc-shaped groove 4.1 and divides the arc-shaped groove 4.1 into two symmetrical cavities 4.3 that are intercommunicated to each other. The non-return blocks 5 are symmetrically accommodated within the two cavities 4.3. The poke rod 6.1 extends into the arc-shaped groove 4.1 and between two non-return blocks 5. The non-return blocks 5 are in clearance fit with both the inner walls of the cavities 4.3 and the inner wall of accommodating cavity 3.1, that is to say, the movable space enclosed by the inner wall of the accommodating cavity 3.1 and the inner walls of the cavities 4.3 is greater than the size of the non-return block 5, and the clearance ranges from 0.1mm to 2 mm. One end of the output shaft 4 away from the gearbox 2, serves as a driving head 4.7, for linkage with an external portion. The driving head 4.7 directly drives a curtain to open or close by connecting with an external rotary joint.

The distance from the bulged surface of the brake block 4.2 to the inner wall of the accommodating cavity 3.1 is greater than the thickness of the poke rod 6.1 but less than the width of the non-return block 5. That is to say, the poke rod 6.1 may rotate in the arc-shaped groove 4.1 in forward or reverse direction. The poke rod 6.1 moves within the left and right two cavities 4.3 over the brake block 4.2 so as to poke the non-return blocks 5 to push against the inner wall of the arc-shaped groove 4.1 and drive the output shaft 4 to rotate synchronously. However, the non-return blocks 5 merely move in respective cavities 4.3 due to the arranged brake blocks 4.2 in the center and are incapable of going over the brake blocks 4.2. Moreover, the closer the non-return block 5 approaches the brake block 4.2, the smaller the movable clearance between the non-return block 5, and the inner wall of the accommodating cavity 3.1 and the bulged surface of the brake block 4.2 becomes, and finally the non-return block 5 is clamped between the inner wall of the accommodating cavity 3.1 and the bulged surface of the brake block 4.2, thereby limiting reverse driving of the output shaft 4, thus an external force or own gravity of the curtain is prevented from being applied to the output bracket 6, the gearbox 2 and the motor 1 are protected and their service lives are prolonged.

Preferably, three arc-shaped grooves 4.1 are available and disposed along the circumferential direction of the end portion of one end of the output shaft 4 toward the gearbox 2 equidistantly. Six non-return blocks 5 are provided. The quantity and positions of the poke rod 6.1 correspond to those of the arc-shaped groove 4.1. The above is a preferred embodiment in which whether driving of the output bracket 6 or non-return operation of the non-return blocks 5 is uniform in force bearing, therefore, deviation is avoided, wear is uniform, service life is substantially same.

The center of the end portion of one end of the output shaft 4 toward the gearbox 2 is provided with a locating shaft 4.4 in a protruded manner. A shaft hole 6.2 matched with the locating shaft 4.4 is formed on the output bracket 6. Match of the locating shaft 4.4 and the shaft hole 6.2 renders coaxial rotation of the output bracket 6 and the output shaft 4, avoiding deviation in the rotation process, reducing wear and lowering noise.

One end of the flange 3 away from the gearbox 2 is provided with a through hole 3.2. The through hole 3.2 is communicated with the accommodating cavity 3.1. There forms a step surface 3.3 on the joint of the through hole 3.2 and the accommodating cavity 3.1. A locating step 4.5 matched with the step surface 3.3 is formed on the output shaft 4. One end of the output shaft 4 away from the gearbox 2 penetrates through the through hole 3.2 and is exposed outside the flange 3. An annular slot 4.6 is formed on the portion of the output shaft 4 exposed outside the flange 3. A circlip 7 is clamped on the annular slot 4.6. The circlip 7 clings to the end surface of one end of the flange 3 away from the gearbox 2. Through match of the step surface 3.3 and the locating step 4.5, and match of the circlip 7 with the annular slot 4.6 and the end surface of the flange 3, the output shaft 4 is limited from axial movement, such that match of the poke rod 6.1 with the non-return block 5, the arc-shaped groove 4.1 and the brake block 4.2 is prevented from being influenced by axial movement of the output shaft 4.

The non-return blocks 5 are spheres. Preferably, the non-return blocks are steel balls. When the non-return mechanism of the present invention operates, friction of the steel balls with the inner wall of the accommodating cavity 3.1, the inner wall of the arc-shaped groove 4.1 and the bulged surface of the brake block 4.2 belong to rolling friction, featuring less friction resistance and wear, longer service life, and convenience in replacement and maintenance.

One end of the flange 3 toward the gearbox 2 is provided with a circle of outer gear ring 3.4. The outer gear ring 3.4 is matched with an inner gear ring of the gearbox 2 so as to improve the close-fit performance of the flange 3 and the gearbox 2. In addition, at least two fasteners 3.5 are equidistantly arranged on the peripheral wall of the flange 3. Clamping grooves 2.1 matched with the fasteners 3.5 are accordingly formed on the gearbox 2. The fasteners 3.5 are matched with the clamping grooves 2.1 so as to fixedly connect the flange 3 on the gearbox 2.

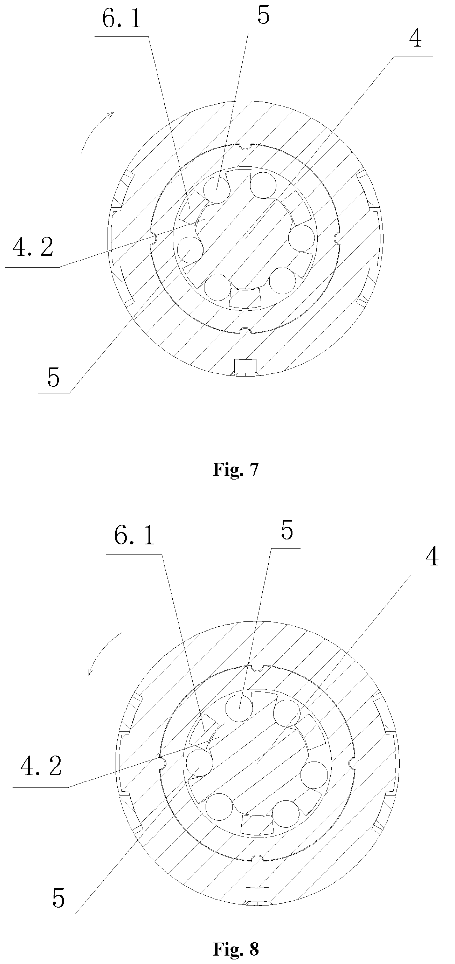

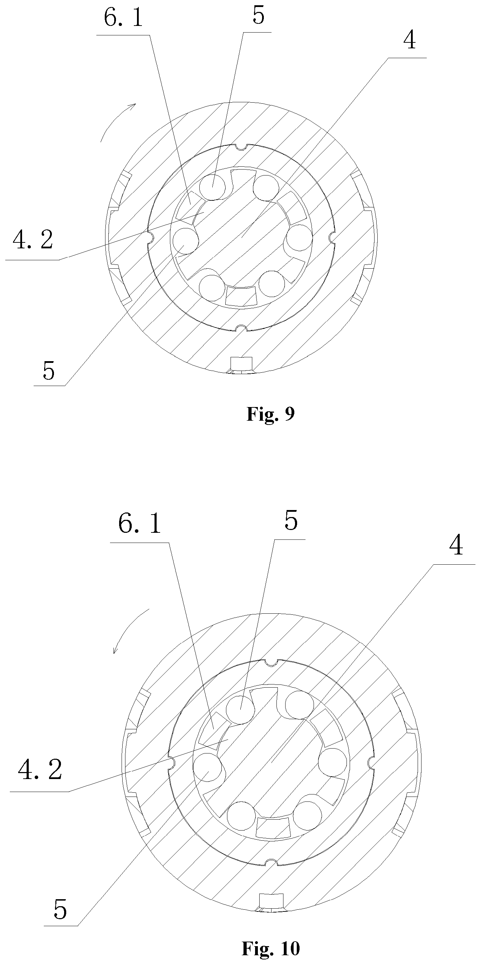

The non-return mechanism for a motor of an electric curtain provided by the present invention works as the following principle: when the motor 1 operates (i.e., the motor rotates in forward or reverse direction), it drives the gearbox 2 to propel the output bracket 6 to rotate; the poke rod 6.1 on the output bracket 6 rotates within the arc-shaped groove 4.1; the poke rod 6.1 penetrates through the clearance between the brake block 4.2 and the inner wall of the accommodating cavity 3.1 to move between two cavities 4.3 to and fro; the poke rod 6.1 rotationally pokes the steel balls in the arc-shaped groove 4.1; Fig. 7 shows that the poke rod 6.1 only pokes the steel balls at the right side of the brake block 4.2 when in forward rotation, while Fig. 8 shows that the poke rod 6.1 only pokes the steel balls at the left side of the brake block 4.2 when in reverse rotation, therefore, the poke rod 6.1 merely pokes the steel balls at one side in forward or reverse rotation; the poked steel balls are not clamped in the clearance between the inner wall of the accommodating cavity 3.1 and the bulged surface of the brake block 4.2 as being pushed by the poke rod 6.1, while the steel balls that are not poked by the poke rod 6.1 are in the cavities 4.3 and thus are not clamped; the poked steel balls push against the inner wall of the arc-shaped groove 4.1 so as to drive the output shaft 4 to rotate, and directly drives a curtain to open or close by connecting with an external rotary joint via the driving head 4.7. When the motor 1 ceases, the output bracket 6 stops rotation, the curtain, under the effect of an external force (blowing by wind or pulling by hands) or own gravity of the curtain drives the output shaft 4, once the output shaft 4 begins to rotate in forward direction (see Fig. 9), the brake block 4.2 in the arc-shaped groove 4.1 pushes the steel balls at the right side, and then the steel balls are clamped between the bulged surface of the brake block 4.2 and the inner wall of the accommodating cavity 3.1 for the distance from the bulged surface of the brake block 4.2 to the inner wall of the accommodating cavity 3.1 is less than the width of the steel balls. Similarly, if the output shaft 4 rotates in revere direction (see Fig. 10), the steel balls at the left side are clamped between the bulged surface of the brake block 4.2 and the inner wall of the accommodating cavity 3.1 so as to prevent the output shaft 4 from reversely driving the output bracket 6. Whether in forward or reverse rotation, the output shaft 4 is locked, therefore, the external force or own gravity of the curtain cannot be applied to the output bracket 6 so as to achieve a non-return effect. Hence, the curtain stops at the position as soon as the motor 1 ceases, free of any position deviation caused by the external force or own gravity of the curtain. At the same time, the motor 1 and the gearbox 2 are well protected.

The flange 3, the output shaft 4 and the steel balls jointly cooperate with the output bracket 6 of the gearbox 2 so as to achieve unidirectional drive fit. The output bracket 6 drives the output shaft 4 to rotate, but the output shaft 4 cannot drive the output bracket 6 to reversely drive. The non-return component effectively provides a non-return force which not only steadily maintains the curtain at the required position when the motor 1 stops, but also prevents the gearbox 2 and motor 1 from being damaged. Besides, the non-return component directly drives the output bracket 6 at the output end of the gearbox 2, structure is simple, and requirements on design are greatly lowered, therefore, cost is low. By adoption of small cogging torque, rotation speed of the motor 1 is improved, and energy consumption of the motor of the curtain is cut down.

It should be noted that, the above embodiments are merely illustrative, rather than restrictive, to the technical solutions of the present invention. The embodiments described above are provided by way of example only, and various changes and modifications will be apparent to persons skilled in the art without departing from the scope of the present invention as defined by the appended claims.

## Claims

1. A non-return mechanism for a motor of an electric curtain, the non-return mechanism comprising a motor (1) and a gearbox (2) that are successively connected, wherein the output end of the gearbox (2) is connected with a non-return component; the non-return component comprises a flange (3) , an output shaft (4) and a non-return block (5); the flange (3) is internally provided with an accommodating cavity (3.1); the end portion of one end of the output shaft (4) toward the gearbox (2) is provided with at least one arc-shaped groove (4.1) that is concave along the radial direction; the non-return block (5) is accommodated within the arc-shaped groove (4.1); the output end of the gearbox (2) is provided with an output bracket (6) configured such that when the motor (1) drives the output bracket (6) to rotate, the output bracket (6) pokes the non-returning block (5), and the non-returning block (5) pushes against the inner wall of the arc-shaped groove (4.1) of the output shaft (4); the output bracket (6) is in unidirectional drive fit with one end of the output shaft (4) toward the gearbox (2), thereby driving the output shaft (4) to synchronously rotate, and they fit within the accommodating cavity (3.1); the non-return block (5) is arranged at the joint of the output bracket (6) and the output shaft (4); at least two fasteners (3.5) are equidistantly arranged on the peripheral wall of the flange (3), clamping grooves (2.1) matched with the fasteners (3.5) are accordingly formed on the gearbox (2) and the fasteners (3.5) are matched with the clamping grooves (2.1) so that the flange (3) is fixedly connected with an outer wall of the gearbox (2); **characterized in that** one end of the flange (3) away from the gearbox (2) is provided with a through hole (3.2); the through hole (3.2) is communicated with the accommodating cavity (3.1); a step surface (3.3) is formed on the joint of the through hole (3.2) and the accommodating cavity (3.1); a locating step (4.5) matched with the step surface (3.3) is formed on the output shaft (4); one end of the output shaft (4) away from the gearbox (2) penetrates through the through hole (3.2) and is exposed outside the flange (3); an annular slot (4.6) is formed on the portion of the output shaft (4) exposed outside the flange (3); a circlip (7) is clamped on the annular slot (4.6); the circlip (7) clings to the end surface of one end of the flange (3) away from the gearbox (2).

2. The non-return mechanism for a motor of an electric curtain of claim 1, wherein the end portion of one end of the output shaft (4) toward the gearbox (2) is provided with at least one arc-shaped groove (4.1) that is concave along the radial direction; the non-return blocks is accommodated within the arc-shaped groove (4.1); a poke rod (6.1) for poking the non-return block (5) extends from the output bracket (6) and fits within the arc-shaped groove (4.1).

3. The non-return mechanism for a motor of an electric curtain of claim 2, wherein a brake block (4.2) is bulged from the bottom of the arc-shaped groove (4.1) and divides the arc-shaped groove (4.1) into two symmetrical cavities (4.3) that are intercommunicated to each other; the non-return blocks (5) are symmetrically accommodated within the two cavities (4.3); the poke rod (6.1) extends into the arc-shaped groove (4.1) and locates between two non-return blocks (5).

4. The non-return mechanism for a motor of an electric curtain of claim 3, wherein the distance from the bulged surface of the brake block (4.2) to the inner wall of the accommodating cavity (4.3) is greater than the thickness of the poke rod (6.1) but less than the width of the non-return block (5).

5. The non-return mechanism for a motor of an electric curtain of claim 3, wherein the non-return blocks (5) are in clearance fit with both the inner walls of the cavities (4.3) and the inner wall of the accommodating cavity (3.1).

6. The non-return mechanism for a motor of an electric curtain of claim 3, wherein the quantity of arc-shaped grooves (4.1) is three and the arc-shaped grooves (4.1) are arranged along the circumferential direction of the end portion of one end of the output shaft (4) toward the gearbox (2) equidistantly; six non-return blocks are provided, and the quantity and positions of the poke rod (6.1) correspond to those of the arc-shaped groove (4.1).

7. The non-return mechanism for a motor of an electric curtain of claim 2, wherein the center of the end portion of one end of the output shaft (4)toward the gearbox (2) is provided with a locating shaft (4.4) in a protruded manner; a shaft hole (6.2) matched with the locating shaft (4.4) is formed on the output bracket (6).

8. The non-return mechanism for a motor of an electric curtain of claims 1-6, wherein the non-return blocks (5) are spheres.

9. The non-return mechanism for a motor of an electric curtain of claim 1, wherein one end of the output shaft (4) away from the gearbox (2), is used as a driving head (4.7) for linkage with an external portion.

## Patentansprüche

1. - Rücklaufsperrmechanismus für einen Motor eines elektrischen Vorhangs, der Rücklaufsperrmechanismus umfassend einen Motor (1) und ein Getriebe (2), die nacheinander verbunden sind, wobei das Abtriebsende des Getriebes (2) mit einer Rücklaufsperrkomponente verbunden ist;
wobei die Rücklaufsperrkomponente einen Flansch (3), eine Abtriebswelle (4) und einen Rücklaufsperrblock (5) umfasst;
der Flansch (3) innen mit einem Aufnahmehohlraum (3.1) versehen ist; der Endabschnitt eines Endes der Abtriebswelle (4) in Richtung des Getriebes (2) mit mindestens einer bogenförmigen Nut (4.1) versehen ist, die entlang der radialen Richtung konkav ist; der Rücklaufsperrblock (5) innerhalb der bogenförmigen Nut (4.1) aufgenommen ist;
das Abtriebsende des Getriebes (2) mit einem Abtriebsbügel (6) versehen ist, der konfiguriert ist, sodass, wenn der Motor (1) den Abtriebsbügel (6) zur Drehung antreibt, der Abtriebsbügel (6) den Rücklaufsperrblock (5) anstößt und der Rücklaufsperrblock (5) gegen die Innenwand der bogenförmigen Nut (4.1) der Abtriebswelle (4) drückt; der Abtriebsbügel (6) in unidirektionaler Antriebspassung mit einem Ende der Abtriebswelle (4) in Richtung des Getriebes (2) ist, wodurch die Abtriebswelle (4) zur synchronen Drehung angetrieben wird, und sie in den Aufnahmehohlraum (3.1) passen;
die Rücklaufsperrmechanismus (5) an der Verbindung des Abtriebsbügels (6) und der Abtriebswelle (4) angeordnet ist;
an der Umfangswand des Flanschs (3) mindestens zwei Befestigungsmittel (3.5) äquidistant angeordnet sind, an dem Getriebe (2) Klemmnuten (2.1) gebildet sind, die an die Befestigungsmittel (3.5) angepasst sind und die Befestigungsmittel (3.5) an die Klemmnuten (2.1) angepasst sind, sodass der Flansch (3) fest mit einer Außenwand des Getriebes (2) verbunden ist;
**dadurch gekennzeichnet, dass** ein von dem Getriebe (2) abgewandtes Ende des Flanschs (3) mit einem Durchgangsloch (3.2) versehen ist; das Durchgangsloch (3.2) mit dem Aufnahmehohlraum (3.1) in Verbindung ist;
an der Verbindung des Durchgangslochs (3.2) und des Aufnahmehohlraums (3.1) eine Stufenfläche (3.3) gebildet ist;
an der Abtriebswelle (4) eine Raststufe (4.5) gebildet ist, die an die Stufenfläche (3.3) angepasst ist;
ein Ende der Abtriebswelle (4) weg von dem Getriebe (2) durch das Durchgangsloch (3.2) dringt und außerhalb des Flanschs (3) freigelegt ist;
auf dem Abschnitt der Abtriebswelle (4), der außerhalb des Flanschs (3) freigelegt ist, ein ringförmiger Schlitz (4.6) gebildet ist;
ein Sicherungsring (7) auf dem ringförmigen Schlitz (4.6) festgeklemmt ist;
der Sicherungsring (7) an der vom Getriebe (2) abgewandten Endfläche des einen Flanschs (3) anliegt.

2. - Rücklaufsperrmechanismus für einen Motor eines elektrischen Vorhangs nach Anspruch 1, wobei der Endabschnitt eines Endes der Abtriebswelle (4) in Richtung des Getriebes (2) mit mindestens einer bogenförmigen Nut (4.1) versehen ist, die entlang der radialen Richtung konkav ist; der Rücklaufsperrblock in der bogenförmigen Nut (4.1) aufgenommen ist; sich eine Stößelstange (6.1) zum Anstoßen des Rücklaufsperrblocks (5) von dem Abtriebsbügel (6) erstreckt und in die bogenförmige Nut (4.1) passt.

3. - Rücklaufsperrmechanismus für einen Motor eines elektrischen Vorhangs nach Anspruch 2, wobei ein Bremsblock (4.2) aus dem Boden der bogenförmigen Nut (4.1) herausgewölbt ist und die bogenförmige Nut (4.1) in zwei symmetrische Hohlräume (4.3) teilt, die miteinander in Verbindung sind; die Rücklaufsperrblöcke (5) symmetrisch in den zwei Hohlräumen (4.3) aufgenommen sind; sich die Stößelstange (6.1) in die bogenförmige Nut (4.1) erstreckt und sich zwischen zwei Rücklaufsperrblöcken (5) befindet.

4. - Rücklaufsperrmechanismus für einen Motor eines elektrischen Vorhangs nach Anspruch 3, wobei der Abstand von der herausgewölbten Oberfläche des Bremsblocks (4.2) zu der Innenwand des Aufnahmehohlraums (4.3) größer ist als die Stärke der Stößelstange (6.1), aber kleiner ist als die Breite des Rücklaufsperrblocks (5).

5. - Rücklaufsperrmechanismus für einen Motor eines elektrischen Vorhangs nach Anspruch 3, wobei die Rücklaufsperrblöcke (5) sowohl mit den Innenwänden der Hohlräume (4.3) als auch mit der Innenwand des Aufnahmehohlraums (3.1) in Spielpassung sind.

6. - Rücklaufsperrmechanismus für einen Motor eines elektrischen Vorhangs nach Anspruch 3, wobei die Anzahl an bogenförmigen Nuten (4.1) drei ist und die bogenförmigen Nuten (4.1) entlang der Umfangsrichtung des Endabschnitts eines Endes der Abtriebswelle (4) in Richtung des Getriebes (2) äquidistant angeordnet sind; sechs Rücklaufsperrblöcke bereitgestellt sind und die Anzahl und die Positionen der Stößelstange (6.1) denen der bogenförmigen Nut (4.1) entsprechen.

7. - Rücklaufsperrmechanismus für einen Motor eines elektrischen Vorhangs nach Anspruch 2, wobei die Mitte des Endabschnitts eines Endes der Abtriebswelle (4) in Richtung des Getriebes (2) mit einer Stellwelle (4.4) auf hervorstehende Weise versehen ist; ein an die Stellwelle (4.4) angepasstes Wellenloch (6.2) an dem Abtriebsbügel (6) gebildet ist.

8. - Rücklaufsperrmechanismus für einen Motor eines elektrischen Vorhangs nach einem der Ansprüche 1 bis 6, wobei die Rücklaufsperrblöcke (5) Kugeln sind.

9. - Rücklaufsperrmechanismus für einen Motor eines elektrischen Vorhangs nach Anspruch 1, wobei ein von dem Getriebe (2) entferntes Ende der Abtriebswelle (4) als Antriebskopf (4.7) zur Verbindung mit einem externen Abschnitt verwendet wird.

## Revendications

1. - Mécanisme de non-retour pour un moteur d'un rideau électrique, le mécanisme de non-retour comprenant un moteur (1) et une boîte de vitesses (2) qui sont reliés successivement, l'extrémité de sortie de la boîte de vitesses (2) étant reliée à un élément de non-retour ; l'élément de non-retour comprend un flasque (3), un arbre de sortie (4) et un bloc de non-retour (5) ; le flasque (3) comporte intérieurement une cavité de réception (3.1) ; la partie terminale d'une extrémité de l'arbre de sortie (4) vers la boîte de vitesses (2) comporte au moins une rainure en forme d'arc (4.1) qui est concave dans la direction radiale ; le bloc de non-retour (5) est reçu à l'intérieur de la rainure en forme d'arc (4.1) ; l'extrémité de sortie de la boîte de vitesses (2) comporte un support de sortie (6) configuré de telle sorte que, lorsque le moteur (1) entraîne le support de sortie (6) en rotation, le support de sortie (6) enfonce le bloc de non-retour (5), et le bloc de non-retour (5) pousse contre la paroi intérieure de la rainure en forme d'arc (4.1) de l'arbre de sortie (4) ; le support de sortie (6) est en ajustement d'entraînement unidirectionnel avec une extrémité de l'arbre de sortie (4) vers la boîte de vitesses (2), entraînant ainsi l'arbre de sortie (4) en rotation synchronisée, et ils s'ajustent à l'intérieur de la cavité de réception (3.1) ; le bloc de non-retour (5) est disposé à la jonction du support de sortie (6) et de l'arbre de sortie (4) ; au moins deux fixations (3.5) sont disposées à égale distance sur la paroi périphérique du flasque (3), des rainures de serrage (2.1) en correspondance avec les fixations (3.5) sont formées en conséquence sur la boîte de vitesses (2), et les fixations (3.5) sont mises en correspondance avec les rainures de serrage (2.1) de telle sorte que le flasque (3) est relié de manière fixe à une paroi extérieure de la boîte de vitesses (2) ;
**caractérisé par le fait qu'**une extrémité du flasque (3) à distance de la boîte de vitesses (2) comporte un trou traversant (3.2) ; le trou traversant (3.2) est en communication avec la cavité de réception (3.1) ; une surface d'épaulement (3.3) est formée sur la jonction du trou traversant (3.2) et de la cavité de réception (3.1) ; un épaulement de positionnement (4.5) mis en correspondance avec la surface d'épaulement (3.3) est formé sur l'arbre de sortie (4) ; une extrémité de l'arbre de sortie (4) à distance de la boîte de vitesses (2) pénètre à travers le trou traversant (3.2) et est exposée à l'extérieur du flasque (3) ; une gorge annulaire (4.6) est formée sur la partie de l'arbre de sortie (4) exposée à l'extérieur du flasque (3) ; un circlip (7) est serré sur la gorge annulaire (4.6) ; le circlip (7) s'accroche à la surface d'extrémité d'une extrémité du flasque (3) à distance de la boîte de vitesses (2).

2. - Mécanisme de non-retour pour un moteur d'un rideau électrique selon la revendication 1, dans lequel la partie terminale d'une extrémité de l'arbre de sortie (4) vers la boîte de vitesses (2) comporte au moins une rainure en forme d'arc (4.1) qui est concave dans la direction radiale ; les blocs de non-retour sont reçus à l'intérieur de la rainure en forme d'arc (4.1) ; une tige d'enfoncement (6.1) pour enfoncer le bloc de non-retour (5) s'étend à partir du support de sortie (6) et s'ajuste à l'intérieur de la rainure en forme d'arc (4.1).

3. - Mécanisme de non-retour pour un moteur d'un rideau électrique selon la revendication 2, dans lequel un bloc de freinage (4.2) est bombé à partir du fond de la rainure en forme d'arc (4.1) et divise la rainure en forme d'arc (4.1) en deux cavités symétriques (4.3) qui communiquent l'une avec l'autre ; les blocs de non-retour (5) sont reçus de manière symétrique à l'intérieur des deux cavités (4.3) ; la tige d'enfoncement (6.1) s'étend dans la rainure en forme d'arc (4.1) et se situe entre les deux blocs de non-retour (5).

4. - Mécanisme de non-retour pour un moteur d'un rideau électrique selon la revendication 3, dans lequel la distance entre la surface bombée du bloc de freinage (4.2) et la paroi intérieure de la cavité de réception (4.3) est supérieure à l'épaisseur de la tige d'enfoncement (6.1), mais inférieure à la largeur du bloc de non-retour (5).

5. - Mécanisme de non-retour pour un moteur d'un rideau électrique selon la revendication 3, dans lequel les blocs de non-retour (5) sont en ajustement avec jeu avec à la fois les parois intérieures des cavités (4.3) et la paroi intérieure de la cavité de réception (3.1).

6. - Mécanisme de non-retour pour un moteur d'un rideau électrique selon la revendication 3, dans lequel la quantité de rainures en forme d'arc (4.1) est de trois et les rainures en forme d'arc (4.1) sont disposées suivant la direction circonférentielle de la partie terminale d'une extrémité de l'arbre de sortie (4) vers la boîte de vitesses (2) de manière équidistante ; six blocs de non-retour sont prévus, et la quantité et les positions de la tige d'enfoncement (6.1) correspondent à celles de la rainure en forme d'arc (4.1).

7. - Mécanisme de non-retour pour un moteur d'un rideau électrique selon la revendication 2, dans lequel le centre de la partie terminale d'une extrémité de l'arbre de sortie (4) vers la boîte de vitesses (2) comporte un arbre de positionnement (4.4) en saillie ; un trou d'arbre (6.2) mis en correspondance avec l'arbre de positionnement (4.4) est formé sur le support de sortie (6).

8. - Mécanisme de non-retour pour un moteur d'un rideau électrique selon les revendications 1 à 6, dans lequel les blocs de non-retour (5) sont des sphères.

9. - Mécanisme anti-retour pour un moteur d'un rideau électrique selon la revendication 1, dans lequel une extrémité de l'arbre de sortie (4), à distance de la boîte de vitesses (2), est utilisée comme tête d'entraînement (4.7) pour une liaison avec une partie externe.
